# EUROPÄISCHE PATENTSCHRIFT

(11) **EP 2 285 742 B1**
(45) Veröffentlichungstag und Bekanntmachung des Hinweises auf die Patenterteilung: **01.05.2013**
(21) Anmeldenummer: 09757607.8
(22) Anmeldetag: 05.06.2009
(51) Int. Cl.: C01C 3/02

(54) **VERFAHREN ZUR HERSTELLUNG VON CYANWASSERSTOFF AN EINEM ALS TRANSPORTWIRBELSCHICHT ZYKLISCH GEFÜHRTEN PARTIKULÄREN WÄRMEÜBERTRÄGER**
METHOD FOR PRODUCING HYDROGEN CYANIDE IN A PARTICULATE HEAT EXCHANGER CIRCULATED AS A MOVING FLUIDIZED BED
PROCÉDÉ DE FABRICATION DE CYANURE D HYDROGÈNE AVEC UN CALOPORTEUR PARTICULAIRE MIS EN CIRCULATION DE MANIÈRE CYCLIQUE EN TANT QUE COUCHE FLUIDISÉE DE TRANSPORT

(30) Priorität: 06.06.2008 DE 102008002258
(43) Veröffentlichungstag der Anmeldung: 23.02.2011
(73) Patentinhaber: Evonik Röhm GmbH, 64293 Darmstadt (DE)
(72) Erfinder: SIEGERT, Hermann, 64342 Seeheim-Jugenheim (DE)
(86) Internationale Anmeldenummer: PCT/EP2009/056911
(87) Internationale Veröffentlichungsnummer: WO 2009/147226

(56) Entgegenhaltungen:
- CH-A- 397 614
- US-A- 2 743 164
- US-A- 3 370 918

## Beschreibung

Die Erfindung betrifft ein Verfahren zur Herstellung von Cyanwasserstoff an einem als Transportwirbelschicht zyklisch geführten partikulären Wärmeüberträger.

Die industrielle Herstellung von Cyanwasserstoff (HCN, Blausäure) erfolgt üblicherweise aus Methan und Ammoniak in der Gasphase gemäß der Reaktionsgleichung

CH₄ + NH₃ → HCN + 3 H₂

Die Reaktion verläuft in hohem Maße endotherm mit 252 kJ/mol und benötigt deshalb einen großen Eintrag an thermischer Energie und aus thermodynamischen Gründen eine sehr hohe Reaktionstemperatur, meist oberhalb von 1000 °C. Diese Reaktion wird typischerweise kontinuierlich betrieben.

Als industrielle Prozesse zur Herstellung von Cyanwasserstoff haben sich im Wesentlichen drei Verfahren durchgesetzt.

Im Andrussow-Verfahren erfolgt die chemische Umsetzung an metallischen Pt/Rh-Netzen bei ca. 1150 °C. Der Energieeintrag erfolgt hier durch parallele Verbrennung von Methan und Ammoniak mit Sauerstoff am selben Reaktionsort. Als Sauerstofflieferant wird sowohl Luft eingesetzt als auch mit Sauerstoff angereicherte Luft bis hin zu reinem Sauerstoff. Das Andrussow-Verfahren ist zwar einfach in der Anlagen- und Prozeßtechnik und bedingt daher vergleichsweise niedrige Investitionskosten. Durch die gleichzeitige Verbrennungsreaktion für den Energieeintrag ist aber die Ausbeute an HCN, bezogen auf NH₃, mit ca. 64 % relativ niedrig. Zusätzlich ist die HCN-Konzentration durch die Verdünnung mit den parallel entstehenden Verbrennungsgasen mit ca. 7 Vol-% sehr niedrig, was zu erhöhtem Aufwand bei der nachfolgenden Abtrennung von HCN führt. Auch die Volumina der nachfolgenden Prozeßgasleitungen müssen aus denselben Gründen entsprechend groß dimensioniert werden.

Bei dem BMA-Verfahren ("Blausäure aus Methan und Ammoniak") erfolgt die Reaktion bei ca. 1200 °C in keramischen, innen mit Katalysator belegten Rohren, welche zwecks Energieeintrag von außen mit einem Heizgas befeuert werden. Das BMA-Verfahren überwindet die Nachteile des Andrussow-Verfahrens vorteilhaft durch eine indirekte Beheizung der Reaktion und erreicht eine Ausbeute an HCN, bezogen auf NH₃, von über 80 % bei einer HCN-Konzentration im umgesetzten Synthesesgas von über 20 Vol.-%. Allerdings wird dieser Vorteil durch einen erheblichen Nachteil erkauft, der in der Komplexität der Anlage und des Verfahrens begründet ist. So werden für eine Produktionsanlage mit einer technisch üblichen Produktionskapazität von z.B. 30.000 Tonnen HCN pro Jahr ca. 6000 Keramikröhren benötigt, die einzeln angeströmt und zwecks Austausch einzeln weggeschaltet werden müssen. Die Röhren bestehen typischerweise aus Al₂O₃. Diese sind unter den Hochtemperaturbedingungen und der mit der Betriebsdauer einhergehenden partiellen Umwandlung in AIN nur begrenzt haltbar und von individuell unterschiedlicher Lebensdauer. Dadurch wird die Komplexität des Verfahrens beträchtlich erhöht, was sich trotz guter HCN-Ausbeute in sehr hohen Investitions- und Betriebskosten auswirkt.

Im Shawinigan-Verfahren wird die Reaktion oberhalb von 1200 °C in einer Kokswirbelschicht durchgeführt, wobei die thermische Energie über Hochspannungselektroden in Form von elektrischer Energie zugeführt wird. Das Shawinigan-Verfahren, obwohl prozeßtechnisch relativ elegant, ist ein durch elektrische Energie beheiztes Verfahren. Elektrische Energie kann heute nur mit einem Wirkungsgrad von ca. 1/3 der thermisch verfügbaren Primärenergie erzeugt werden. Daher ist die indirekte Sekundärenergieversorgung dieses Prozesses unverhältnismäßig kostspielig, so daß dieser Prozeß nur in Sonderregionen und nur in sehr kleinen Anlagen realisiert wird. Für den großtechnischen Einsatz ist er wegen sehr hoher variabler Herstellungskosten und aus energetischen Gründen unwirtschaftlich.

Andere bislang beschriebene Wirbelschichtverfahren zur Herstellung von Cyanwasserstoff haben sich technisch nicht durchgesetzt, weil sie entweder eine zu hohe technische Komplexität aufwiesen oder durch ihre spezifische Konstruktionsgegebenheit an den betreffenden Wärmeausdehnungsproblemen bzw. Materialanforderungen bei extrem hohen Temperaturen rein technisch scheiterten und vor allem, weil das Problem des Energieeintrags nicht ausreichend wirtschaftlich attraktiv gelöst wurde.

US 3370918 **offenbart ein Verfahren zur Herstellung von Cyanwasserstoff ohne Verwendung von Sauerstoff in einem Fließbettreaktor. Das Fließbett wird durch Verbrennung eines Gases im Reaktor erhitzt. Das Problem der Kohlenstoffablagerungen wird nicht diskutiert.**

Alle bekannten Verfahren haben daher technische und wirtschaftliche Nachteile, die es zu überwinden gilt.

Überraschend wurde nun gefunden, daß diese Aufgabenstellung gelöst werden kann durch ein Verfahren zur kontinuierlich betriebenen Herstellung von Cyanwasserstoff durch Umsetzung von Ammoniak mit Kohlenwasserstoffen, wobei das Reaktionsgasgemisch mittels indirekter Beheizung durch Kontakt mit einem partikulärem Wärmeüberträger im Wirbelbett auf Reaktionstemperatur gebracht wird, bei dem der Wärmeüberträger in einer Transportwirbelschicht zyklisch geführt wird, wobei in einem aufsteigenden Transportstrom der Wärmeüberträger aufgeheizt wird und dieser in einem absteigenden Transportstrom mit dem Reaktionsgasgemisch in Kontakt gebracht wird.

Gegenstand der Erfindung ist somit ein Verfahren zur kontinuierlich betriebenen Herstellung von Cyanwasserstoff durch Umsetzung von Ammoniak mit Kohlenwasserstoffen, wobei das Reaktionsgasgemisch mittels indirekter Beheizung durch Kontakt mit einem partikulärem Wärmeüberträger im Wirbelbett auf Reaktionstemperatur gebracht wird, und das dadurch gekennzeichnet ist, daß der Wärmeüberträger in einer Transportwirbelschicht zyklisch geführt wird, wobei in einem aufsteigenden Transportstrom der Wärmeüberträger aufgeheizt wird und dieser in einem absteigenden Transportstrom mit dem Reaktionsgasgemisch in Kontakt gebracht wird.

Der Lösungsgedanke der vorliegenden Erfindung setzt an, den Vorteil der hohen Ausbeute und der hohen HCN-Konzentration im Produktstrom des BMA-Verfahrens zu nutzen, gleichzeitig aber die Anlagen- und prozesstechnisch nachteilige Führung des Reaktionsgasgemisches durch eine Vielzahl stationärer, von außen befeuerter Keramikrohre zu vermeiden. Kerngedanke der Erfindung ist, stattdessen die indirekte Wärmeeinbringung durch einen partikulären Wärmeüberträger in einer wandernden Transportwirbelschicht vorzunehmen. Dabei haben Aufheizung des Wärmeüberträgers und die Wärmeabgabe an das Reaktionsgasgemisch zeitlich und räumlich getrennt zu erfolgen, wobei aber der Wärmeüberträger zyklisch geführt wird. Die Aufheizung des Wärmeüberträgers erfolgt in einem aufsteigenden Transportstrom und der Kontakt mit dem Reaktionsgasgemisch und dessen Umsetzung in einem absteigenden Transportstrom.

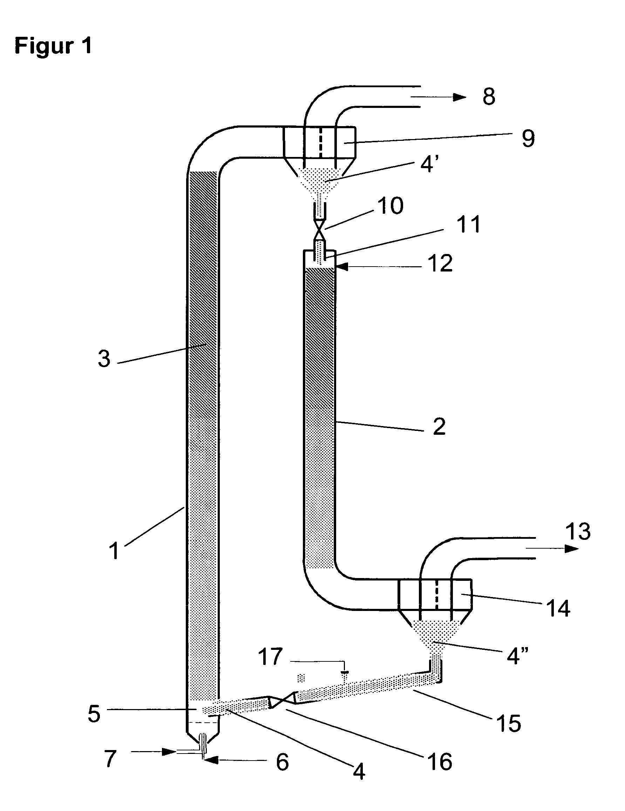

Figur 1 zeigt beispielhaft in schematischer Darstellung das erfindungsgemäße Verfahrensprinzip und eine entsprechende Anlage.

Zwei vertikal positionierte Rohrreaktoren (1,2) sind im Kreislauf mit einander verbunden. Im Rohrreaktor (1), "Riser", erfolgt in einem aufsteigenden Transportstrom die Fluidisierung und Aufheizung (3) des im unteren Bereich vorgelegten bzw. zugeführten partikulären Wärmeüberträgers (4) durch einen Heizgasstrom (5), der dort zugeführt bzw. zweckmäßigerweise durch Verbrennung eines Brennstoffgemisches (6, 7) erzeugt wird. Am Kopf des Rohrreaktors (1) wird die Transportwirbelschicht abgeführt und einer stofflichen Trennung von heißem partikulärem Wärmeüberträger (4') und Gasstrom, welcher als Abgas (8) ausgeschleußt wird, zugeführt. Zweckmäßigerweise erfolgt die Trennung der Gas-Feststoffpartikelphase in einem Zyklon (9). Die heißen Wärmeüberträgerpartikel (4') gelangen über eine Dosiervorrichtung (10) in den Kopf (11) des Rohrreaktors (2), "Downer", wo das Reaktionsgasgemisch aus Ammoniak und Kohlenwasserstoffen (12) zugeführt wird, das durch den unmittelbaren Kontakt mit den heißen Wärmeüberträgerpartikeln schlagartig auf Reaktionstemperatur gebracht wird. Die Umsetzung zu Cyanwasserstoff erfolgt in einem absteigenden Transportstrom im Rohrreaktor (2), in der nach dem plug-flow-Prinzip wandernden Transportwirbelschicht. Am unteren Ende des Rohrreaktors (2) wird die Transportwirbelschicht abgeführt und wiederum einer stofflichen Trennung von heißem partikulärem Wärmeüberträger (4") und Gasstrom, welcher als Produktgas (13) ausgeschleußt wird, zugeführt. Zweckmäßigerweise erfolgt auch hier die Trennung der Gas-FeststoffpartikelPhase in einem Zyklon (14). Die abgetrennten Wärmeüberträgerpartikel (4") werden über eine Rohrleitung (15) mit einer Dosiervorrichtung (16) in den unteren Bereich des Rohrreaktors (1) zurückgeführt. Über eine Zuleitung (17) zur Rohrleitung (15) kann der vom Gasstrom abgetrennte partikuläre Wärmeüberträger zur Rückspülung des Zwischenkorngasanteils mit einem Spülgas gespült werden.

Für das erfindungsgemäße Verfahren geeignete Anlagen können in an sich bekannter Weise konzipiert, ausgelegt und erstellt werden. Die Anlagenkomponenten können aus den für Hochtemperaturprozesse geeigneten Werkstoffen hergestellt werden. Ein wesentlicher Vorteil ist, daß alle Anlagenkomponenten dieses Hochtemperaturprozesses in der Form von feuerfest ausgemauerten Baugruppen realisiert werden können.

Als partikulärer Wärmeüberträger wir keramisches Material verwendet. Dieses besteht vorzugsweise jeweils im Wesentlichen aus Aluminiumoxid, Aluminiumnitrid oder einer Mischphase von Aluminiumoxid und Aluminiumnitrid.

Aluminiumoxid und Aluminiumnitrid besitzen für den BMA-Prozess katalytische Eigenschaften, wobei Aluminiumoxid eine höhere Aktivität besitzt als Aluminiumnitrid. In längerem Kontakt mit dem Ammoniak-Kohlenwasserstoff-Synthesegas wandelt sich Aluminiumoxid sukzessive partiell in Aluminiumnitrid um, wodurch die katalytische Aktivität sinkt und die Ausbeute an HCN abnimmt.

Das erfindungsgemäße Verfahren weist diesen Nachteil nicht auf. Dies liegt wiederum an der räumlichen und zeitlichen Trennung von Aufheizphase und Reaktionsphase, da die Aufheizphase so gesteuert werden kann, daß etwa gebildetes Aluminiumnitrid oxidiert, also zu Aluminiumoxid rückumgewandelt wird.

Vorteilhaft können die katalytischen Eigenschaften des partikulären Wärmeüberträgers gesteigert werden, indem dieser mit einem oder mehreren Elementen aus der Gruppe Platin, Palladium, Iridium, Rhodium, Kupfer und Nickel und möglichen anderen Elementen dotiert wird. Entsprechende partikuläre keramische Katalysatormaterialien sind an sich bekannt und identisch oder nahezu identisch mit Katalysatoren, wie sie für Crack-, Reforming- und Platformingprozesse bei der Erdölverarbeitung im Einsatz sind.

Der zur Fluidisierung und Aufheizung des partikulären Wärmeüberträgers in dem aufsteigenden Transportstrom ("Riser") dienende Heizgasstrom wird vorzugsweise durch Verbrennung eines Brennstoffgemisches erzeugt. Der Heizgasstrom kann durch Verbrennung von Wasserstoff, Methan, Erdgas, höheren Kohlenwasserstoffen oder Gemischen dieser Brennstoffe mit Luft, Luft-Sauerstoffgemisch oder Sauerstoff erzeugt werden. Zur Verbrennung können neben externen Brennstoffen auch übrigbleibende Restgase dieses Prozesses, welche in diesem Fall im Wesentlichen aus Wasserstoff bestehen, oder beliebige Restgase, welche am Standort dieses Chemieprozesses anfallen, eingesetzt werden.

Im Falle des Einsatzes höherer Kohlenwasserstoffe empfiehlt sich der zusätzliche Einsatz von Wasserstoff zur Vermeidung von Kohlenstoffablagerungen. Insgesamt ist das erfindungsgemäße Verfahren, im Gegensatz zum konventionellen BMA-Verfahren, sehr unempfindlich gegenüber Kohlenstoffablagerungen an dem partikulären Wärmeüberträger, sowohl in der Aufheizphase als auch in der Reaktionsphase, so daß anstatt möglichst reinem Methangas auch niedere Qualitäten und andere, insbesondere höhere Kohlenwasserstoffe verwendet werden können. Dies liegt an der räumlichen und zeitlichen Trennung von Aufheizphase und Reaktionsphase, da die Aufheizphase so gesteuert werden kann, daß etwaige Kohlenstoffablagerungen abgebrannt werden.

Mengenfluß, Temperatursteuerung und Verweildauer der partikulären Wärmeüberträger in der Aufheizphase im aufsteigenden Transportstrom werden gesteuert. Hiernach erfolgt eine stoffliche Trennung des Heizgas-Partikelflusses, zweckmäßigerweise durch einen Zyklon, von dem das Heizgas aus dem Prozess zur einer etwaigen weiteren Verwendung oder als Abgas ausgeschleust wird.

Der heiße partikuläre Wärmeüberträger wird in einem absteigenden Transportstrom ("Downer") mit dem Reaktionsgasgemisch in Kontakt gebracht, wobei die Umsetzung des Ammoniak-Kohlenwasserstoff-Synthesegases zu Cyanwasserstoff erfolgt. Es zeigt sich, daß die für das erfindungsgemäße Verfahren charakteristische schlagartige Aufheizung des Synthesegasgemisches zu höchsten Ausbeuten führt. Dies wird durch das erfindungsgemäße Verfahren dadurch realisiert, daß der definiert überhitzte, fluidisierte partikuläre Wärmeüberträger sehr schnell mit dem Synthesegas in Kontakt gebracht wird und dann in einer Transportwirbelschicht nach dem plug-flow-Prinzip wandert.

Die Umsetzung des Reaktionsgasgemisches aus Ammoniak, Kohlenwasserstoffen und gegebenenfalls Wasserstoff erfolgt bei Temperaturen von 750 bis 1200 °C, vorzugsweise bei 800 bis 900 °C. Hiernach erfolgt die stoffliche Trennung des Produktgas-Partikelflusses, zweckmäßigerweise durch einen Zyklon, von dem das Produktgas aus dem Prozess zur weiteren Aufarbeitung und Isolierung von Cyanwasserstoff ausgeschleust wird. Das umgesetzte Synthesesgas wird zur Gewinnung von Cyanwasserstoff in üblicher Weise zerlegt und aufgearbeitet, wie dies bei den konventionellen Verfahren bekannt ist.

Nach der Abtrennung des Produktgases wird der partikuläre Wärmeüberträger im Kreislauf in die Aufheizphase zurückgeführt. Hierbei ist es zweckmäßig, den vom Produktgasstrom abgetrennten partikulären Wärmeüberträger zur Rückspülung des Zwischenkorngasanteils mit einem Spülgas zu spülen. Das Spülgas kann jeweils im Wesentlichen aus Wasserstoff, Methan oder aus teilweise rückgeführtem Abgas des Heizgasstroms bestehen.

Das erfindungsgemäße Verfahren weist gegenüber den bekannten Verfahren zur Herstellung von Cyanwasserstoff zahlreiche und zum Teil unerwartete Vorteile auf. So liegt die Produktausbeute mindestens in der Größenordnung des konventionellen BMA-Verfahrens eingesetzten Ammoniak, sogar deutlich darüber und liefert im Produktgas eine deutlich höhere HCN-Konzentration. Es ist gegenüber dem konventionellen BMA-Verfahren Anlagen- und prozesstechnisch wesentlich einfacher und damit kostengünstiger. Nachfolgend wird beispielhaft das erfindungsgemäße Verfahren in der Dimensionierung einer Pilotanlage beschrieben.

### Experimentelle Beispiele

Eine für Beispielversuche erstellte Pilotanlage gemäß Figur 1 hatte folgende Abmessungen:
Rohrreaktor 1 = Riser:
   Innendurchmesser : 80 mm
   Länge: 6700 mm
Rohrreaktor 2 = Downer:
   Innendurchmesser : 50 mm
   Länge : 2000 mm
Abscheidebehälter des Zyklon 9 :
   Innendurchmesser : 600 mm
   Höhe: 900 mm
Abscheidebehälter des Zyklon 14 :
   Innendurchmesser : 266 mm
   Höhe: 625 mm

Die Konstruktion bestand aus einem äußeren Metallmantel mit einer vollständigen Innenauskleidung aus Aluminiumoxid und einer Faserkeramik dazwischen zum Ausgleich thermischer Spannungen. Zur weitgehenden Vermeidung von Wärmeverlusten wurde die Anlage außen mit einer 400 mm dicken Quarzwolle-Isolation umgeben, die mittig innerhalb dieser Schicht zusätzlich mit einer elektrisch versorgten Stützheizung auf einem Niveau von 500 °C versehen war. Dem Zyklon 9 und dem Zyklon 14 waren zur weitgehend vollständigen Partikelabscheidung jeweils ein weiterer Zyklon nachgeschaltet.

Alle von außen beeinflussbaren Ströme wurden über ein Prozessleitsystem gesteuert bzw. geregelt.

Die Einzelströme des Reaktionsgemisches Nr.12 wurden jeweils als feste Größe vorgegeben bzw. eingestellt.

Die Brennstoffmengen wurden so eingeregelt, dass die Temperatur im Abgas Nr.8 wie auch die damit identische Temperatur des heißen Wärmeträgers 4' den angestrebten Wert erreichten.

Die Dosiervorrichtung Nr. 10 wurden so geregelt, dass im Produktgas Nr. 13 die gewünschte Produktgastemperatur erreicht wurde und die Dosiervorrichtung Nr. 16 so, dass der Füllstand im Abscheidebehälter des Zyklon 14 konstant gehalten wurde.

Beispiel 1 :

Als partikulärer Wärmeträger / Katalysator wurde ein Aluminiumoxid mit der Bezeichnung Puralox SCCa 150-200 der Fa. Sasol Germany mit einer durchschnittlichen Korngröße d₅₀ von 150 Mikrometer eingesetzt.

Im stationären Zustand wurden gemäß obiger Regelungsstrategie folgende Ströme gefahren:

| | |
|---|---|
| Nr. 12 Reaktionsgaskomponente 1 = Ammoniak | 1,55 kg/h |
| Nr. 12 Reaktionsgaskomponente 2 = Methan | 1,46 kg/h |
| Nr. 6 Brennstoffkomponente 1 = Wasserstoff | 1,20 kg/h |
| Nr. 7 Brennstoffkomponente 2 = Luft | 43,26 kg/h |
| Umlaufende Menge des Wärmeträgers | 170,44 kg/h (indirekt berechnet) |

Die Temperatur im Abgas Nr.8 resultierte mit 1030 °C und im Produktgas Nr. 13 mit 880 °C.

Nach einer Betriebsdauer von 9 Stunden wurde im Produktgas Nr.13 folgendes stationäres Reaktionsergebnis erhalten :

| | | |
|---|---|---|
| Zusammensetzung per Gaschromatographie : | HCN | 23,5 Vol-% |
| | Wasserstoff | 72,7 Vol.-% |
| | Stickstoff | 1,3 Vol-% |
| | Methan | 2,5 Vol-% |
| | Ammoniak | 0 Vol-% |

Die per Massebilanz über 2 Stunden in einem nachgeschalteten Wäscher mit NaOH-Lösung aufgesammelte HCN-Menge betrug 2,238 kg/h. Dies entspricht einer auf die eingesetzte Menge Ammoniak bezogenen Ausbeute von 90,9 %.

### Beispiel 2 :

Der Versuch in Beispiel 1 wurde wiederholt mit der Ausnahme, dass der verwendete partikuläre Wärmeträger / Katalysator mit Platin beschichtet wurde (über Hexachloroplatinat-Lösung und anschließender Reduktion mit Wasserstoff bei 500 °C / 5 h). Die Platinbeschichtung betrug 1,49 Gew.-%.

Nach einer Betriebsdauer von 7 Stunden wurde im Produktgas Nr.13 folgendes stationäres Reaktionsergebnis erhalten :

| | | |
|---|---|---|
| Zusammensetzung per Gaschromatographie : | HCN | 23,8 Vol-% |
| | Wasserstoff | 72,8 Vol.-% |
| | Stickstoff | 1,1 Vol-% |
| | Methan | 2,3 Vol-% |
| | Ammoniak | 0 Vol-% |

Die per Massebilanz über 2 Stunden in einem nachgeschalteten Wäscher mit NaOH-Lösung aufgesammelte HCN-Menge betrug 2,267 kg/h. Dies entspricht einer auf die eingesetzte Menge Ammoniak bezogenen Ausbeute von 92,1 %.

### Erläuterung der Bezugszeichen

| Nummer | Bezeichnung |
|---|---|
| 1 | Rohrreaktor 1 |
| 2 | Rohrreaktor 2 |
| 3 | Aufheizzone im Rohrreaktor 1 |
| 4 | Wärmeüberträger |
| 4' | heißer partikulärer Wärmeüberträger |
| 4" | heißer partikulärer Wärmeüberträger |
| 5 | Heizgasstrom |
| 6 | Brennstoffgemischkomponente 1 |
| 7 | Brennstoffgemischkomponente 2 |
| 8 | Abgas |
| 9 | Zyklon |
| 10 | Dosiervorrichtung |
| 11 | Kopf |
| 12 | Reaktionsgemisch aus Ammoniak und Kohlenwasserstoffen |
| 13 | Produktgas |
| 14 | Zyklon |
| 15 | Rohrleitung |
| 16 | Dosiervorrichtung |
| 17 | Zuleitung |

## Patentansprüche

1. Verfahren zur kontinuierlich betriebenen Herstellung von Cyanwasserstoff durch Umsetzung von Ammoniak mit Kohlenwasserstoffen, wobei das Reaktionsgasgemisch mittels indirekter Beheizung durch Kontakt mit einem partikulärem Wärmeüberträger im Wirbelbett auf Reaktionstemperatur gebracht wird,
**dadurch gekennzeichnet,**
**daß** der Wärmeüberträger in einer Transportwirbelschicht zyklisch geführt wird, wobei in einem aufsteigenden Transportstrom der Wärmeüberträger aufgeheizt wird und dieser in einem absteigenden Transportstrom mit dem Reaktionsgasgemisch in Kontakt gebracht wird.

2. Verfahren nach Anspruch 1,
**dadurch gekennzeichnet,**
**daß** die Umsetzung des Reaktionsgasgemisches aus Ammoniak, Kohlenwasserstoffen und gegebenenfalls Wasserstoff bei Temperaturen von 750 bis 1200 °C, vorzugsweise bei 800 bis 900 °C, erfolgt.

3. Verfahren nach Anspruch 1,
**dadurch gekennzeichnet,**
**daß** die Fluidisierung und Aufheizung des partikulären Wärmeüberträgers in dem aufsteigenden Transportstrom mittels eines durch Verbrennung erzeugten Heizgasstromes bewirkt wird.

4. Verfahren nach Anspruch 3,
**dadurch gekennzeichnet,**
**daß** der Heizgasstrom durch Verbrennung von Wasserstoff, Methan, Erdgas, höheren Kohlenwasserstoffen oder Gemischen dieser Brennstoffe mit Luft, Luft-Sauerstoffgemisch oder Sauerstoff erzeugt wird.

5. Verfahren nach den Ansprüchen 1 bis 4
**dadurch gekennzeichnet,**
**daß** jeweils im Anschluß an den aufsteigenden und dem absteigenden Transportstrom der Transportwirbelschicht eine stoffliche Trennung von partikulärem Wärmeüberträger und Gasstrom erfolgt.

6. Verfahren nach Anspruch 5,
**dadurch gekennzeichnet,**
**daß** die jeweilige Trennung von partikulärem Wärmeüberträger und Gasstrom durch Zyklone erfolgt.

7. Verfahren nach Anspruch 6,
**dadurch gekennzeichnet,**
**daß** der vom Gasstrom abgetrennte partikuläre Wärmeüberträger zur Rückspülung des Zwischenkorngasanteils mit einem Spülgas gespült wird.

8. Verfahren nach Anspruch 7,
**dadurch gekennzeichnet,**
**daß** das Spülgas jeweils im Wesentlichen aus Wasserstoff, Methan oder dem Abgas des Heizgasstroms besteht.

9. Verfahren nach den Ansprüchen 1 bis 8,
**dadurch gekennzeichnet,**
**daß** der partikuläre Wärmeüberträger jeweils im Wesentlichen aus Aluminiumoxid, Aluminiumnitrid oder einer Mischphase von Aluminiumoxid und Aluminiumnitrid besteht.

10. Verfahren nach Anspruch 9,
**dadurch gekennzeichnet,**
**daß** der partikuläre Wärmeüberträger mit einem oder mehreren Elementen aus der Gruppe Platin, Palladium, Iridium, Rhodium, Kupfer und Nickel dotiert ist.

## Claims

1. Process for continuously preparing hydrogen cyanide by reacting ammonia with hydrocarbons, the reaction gas mixture being brought to reaction temperature in the fluidized bed by means of indirect heating by contact with a particulate heat transferrer,
**characterized in that**
the heat transferrer is conducted cyclically in a transported fluidized bed, the heat transferrer being heated in an ascending transport stream and being contacted with the reaction gas mixture in a descending transport stream.

2. Process according to Claim 1,
**characterized in that**
the reaction gas mixture composed of ammonia and hydrocarbons with or without hydrogen is converted at temperatures of 750 to 1200°C, preferably at 800 to 900°C.

3. Process according to Claim 1,
**characterized in that**
the fluidization and heating of the particulate heat transferrer in the ascending transport stream is brought about by means of a heating gas stream generated by combustion.

4. Process according to Claim 3,
**characterized in that**
the heating gas stream is obtained by combusting hydrogen, methane, natural gas, higher hydrocarbons or mixtures of these fuels with air, an air-oxygen mixture or oxygen.

5. Process according to Claims 1 to 4,
**characterized in that**
a material separation of particulate heat transferrer and gas stream is effected in each case downstream of the ascending and descending transport streams of the transported fluidized bed.

6. Process according to Claim 5,
**characterized in that**
the particular separation of particulate heat transferrer and gas stream is effected by means of cyclones.

7. Process according to Claim 6,
**characterized in that**
the particulate heat transferrer removed from the gas stream is purged with a purge gas to purge back the gas content of the intermediate particles.

8. Process according to Claim 7,
**characterized in that**
the purge gas consists in each case essentially of hydrogen, methane or the offgas of the heating gas stream.

9. Process according to Claims 1 to 8,
**characterized in that**
the particulate heat transferrer consists in each case essentially of aluminium oxide, aluminium nitride or a mixed phase of aluminium oxide and aluminium nitride.

10. Process according to Claim 9,
**characterized in that**
the particulate heat transferrer is doped with one or more elements from the group of platinum, palladium, iridium, rhodium, copper and nickel.

## Revendications

1. Procédé pour la production de cyanure d'hydrogène, conduite en continu, par mise en réaction d'ammoniac avec des hydrocarbures, dans lequel on porte à la température de réaction le mélange de gaz de réaction, au moyen d'un chauffage indirect, par contact avec un milieu caloporteur particulaire en lit fluidisé,
**caractérisé**
**en ce qu'**on envoie par cycles le milieu caloporteur dans une couche tourbillonnaire de transport, le milieu caloporteur étant chauffé dans un courant de transport ascendant et ce milieu caloporteur étant mis en contact avec le mélange de gaz de réaction dans un courant de transport descendant.

2. Procédé selon la revendication 1,
**caractérisé en ce que**
la réaction du mélange de gaz de réaction à base d'ammoniac, d'hydrocarbures et éventuellement d'hydrogène s'effectue à des températures de 750 à 1 200 °C, de préférence de 800 à 900 °C.

3. Procédé selon la revendication 1,
**caractérisé en ce que**
la fluidisation et le chauffage du milieu caloporteur particulaire dans le courant de transport ascendant sont causés par un courant de gaz chaud produit par combustion.

4. Procédé selon la revendication 3,
**caractérisé en ce que**
le courant de gaz chaud est produit par combustion d'hydrogène, de méthane, de gaz naturel, d'hydrocarbures supérieurs ou de mélanges de ces combustibles avec l'air, un mélange d'air-oxygène ou l'oxygène.

5. Procédé selon les revendications 1 à 4,
**caractérisé**
**en ce qu'**une séparation de substances du milieu caloporteur particulaire et du courant de gaz s'effectue respectivement à la suite du courant de transport ascendant et du courant de transport descendant de la couche tourbillonnaire de transport.

6. Procédé selon la revendication 5,
**caractérisé en ce que**
la séparation respective de l'agent caloporteur particulaire et du courant de gaz s'effectue au moyen de séparateurs à cyclone.

7. Procédé selon la revendication 6,
**caractérisé en ce que**
le milieu caloporteur particulaire séparé du courant de gaz est lavé avec un gaz de lavage pour le rétrolavage de la fraction de gaz interstitiel.

8. Procédé selon la revendication 7,
**caractérisé en ce que**
le gaz de lavage consiste respectivement essentiellement en hydrogène, méthane ou en le gaz rejeté du courant de gaz chaud.

9. Procédé selon les revendications 1 à 8,
**caractérisé en ce que**
le milieu caloporteur particulaire consiste essentiellement en oxyde d'aluminium, nitrure d'aluminium ou en une phase mixte d'oxyde d'aluminium et nitrure d'aluminium.

10. Procédé selon la revendication 9,
**caractérisé en ce que**
le milieu caloporteur particulaire est dopé avec un ou plusieurs éléments choisis dans le groupe constitué par le platine, le palladium, l'iridium, le rhodium, le cuivre et le nickel.
